Europäisches Patentamt

(19) European Patent Office

Office européen des brevets

(11) Numéro de publication: **0 226 484**
**B1**

(12) **FASCICULE DE BREVET EUROPEEN**

(45) Date de publication du fascicule du brevet:
07.02.90

(21) Numéro de dépôt: 86402325.4

(22) Date de dépôt: 16.10.86

(51) Int. Cl.⁴: **G03B 42/02, G01N 23/04**

(54) **Appareil de radiologie à balayage.**

(30) Priorité: **22.10.85 FR 8515665**

(43) Date de publication de la demande:
**24.06.87 Bulletin 87/26**

(45) Mention de la délivrance du brevet:
**07.02.90 Bulletin 90/6**

(84) Etats contractants désignés:
**DE GB IT NL**

(56) Documents cités:
**FR-A- 1 448 176
FR-A- 2 188 862
FR-A- 2 453 408**

(73) Titulaire: **GENERAL ELECTRIC CGR S.A., 100, rue Camille-Desmoulins, F-92130 Issy les Moulineaux(FR)**

(72) Inventeur: **Trotel, Jacques, THOMSON-CSF SCPI 19, avenue de Messine, F-75008 Paris(FR)**
Inventeur: **Ploix, Jean-Luc, THOMSON-CSF SCPI 19, avenue de Messine, F-75008 Paris(FR)**

(74) Mandataire: **Ballot, Paul Denis Jacques, Cabinet Ballot-Schmit 7, rue le Sueur, F-75116 Paris(FR)**

## Description

La présente invention concerne un appareil de radiologie à balayage, notamment pour radiodiagnostic, destiné à réaliser une image d'un objet ou zone à examiner d'un patient sur un film en balayant cet objet par un faisceau X-plat en éventail.

Les appareils pour réaliser une image radiologique d'un objet comportent généralement une source de rayons X, envoyant un flux sensiblement uniforme de rayons X sur toute la surface de l'objet dont on veut faire l'image. Les rayons X traversent l'objet en subissant une atténuation variable, et viennent impressionner un récepteur sensible aux rayons X.

Le récepteur peut être un film où l'effet des rayons X produit une modification du matériau constituant sa surface sensible, telle que création de germe, création de pièges, ou plus généralement toutes transformations donnant lieu à une modification locale d'une propriété physique pouvant être mesurée par un moyen d'analyse approprié ; de tels films pouvant consister par exemple, en une plaque photographique dont le noircissement est fonction de la dose X reçue en chaque point, ou encore en une plaque d'un matériau à luminescence photostimulable, la luminescence de chaque point étant proportionnelle à la dose X reçue.

Un autre type de récepteur peut être constitué par un réseau à deux dimensions de cellules sensibles au rayonnement X, de petite dimension, chaque cellule fournissant un signal électrique proportionnel à la dose X reçue.

Dans les appareils de radiodiagnostic classiques, la dose X reçue en un point du récepteur correspond d'une part, à la quantité de rayons X qui n'a pas été absorbée par l'objet sur une trajectoire en ligne droite de la source de rayonnement X au récepteur, et d'autre part à la quantité de rayons X diffusée par tous les points de l'objet soumis au rayonnement X. De ce fait, le récepteur enregistre deux images :
- la première image est constituée par les rayons directs se propageant en ligne droite, cette image ayant une résolution qui ne dépend que de la dimension de la source de rayonnement X ;
- la seconde image est constituée par les rayons X diffusés ; cette image est très floue et diminue considérablement la qualité de l'image globale.

Les appareils de radiologie à balayage permettent de réduire l'influence du rayonnement X diffusé. Dans ces appareils, la source X éclaire l'objet à travers un collimateur ou fente qui donne au rayonnement X la forme d'un faisceau plat dit "en éventail". Le faisceau passe ensuite à travers une seconde fente légèrement plus étroite que la projection de la première fente ou collimateur sur le plan de cette seconde fente.

Le faisceau plat en éventail vient ensuite exposer un récepteur qui peut être un récepteur plan comme dans le système sans balayage, ou un récepteur de forme allongée limitée à la projection de la seconde fente sur le plan de ce récepteur.

Dans cette configuration, l'objet est disposé entre la première et la seconde fente et seule une fraction de l'objet est exposée au rayonnement X. Cette fraction a la forme d'une tranche définie par l'intersection du faisceau en forme d'éventail et de l'objet ; de cette façon, un point du récepteur exposé au rayonnement X direct n'est exposé qu'au rayonnement X diffusé par la fraction exposée de l'objet, ce qui constitue une réduction du rayonnement X diffusé d'autant plus considérable que la première fente est étroite, c'est-à-dire que le faisceau est plat.

Pour exposer tout l'objet, le faisceau en éventail est déplacé par rapport à l'objet de façon à en exposer successivement toutes les fractions dans un mouvement de balayage, l'image complète de l'objet étant obtenue à la fin de ce balayage.

Les systèmes qui utilisent la technique du balayage permettent ainsi une amélioration importante de la qualité de l'image. Mais à ce jour, une des limites à l'utilisation de cette technique provient des récepteurs, notamment quand on désire réaliser de manière simul tanée plusieurs images d'une même zone de l'objet à examiner. Il peut être en effet intéressant d'obtenir deux images simultanées de l'objet, obtenues par deux faisceaux plats en éventail dont les sources ont par exemple une position différente, pour obtenir des images différentes qui apportent une information stéréoscopique ; un autre cas peut être par exemple celui où les faisceaux plats en éventail ont des spectres d'énergie différents, les différentes images du même objet aux différentes énergies peuvent alors fournir des informations supplémentaires sur la nature des tissus ou matériaux constituant l'objet.

Les faisceaux en éventail ayant une épaisseur relativement faible, il est possible dans un sytème à balayage de disposer plusieurs couples de fentes, afin de former plusieurs faisceaux en éventail qui balayent l'objet les uns derrière les autres. Actuellement, les récepteurs du type film, précédemment mentionnés, se prêtent mal à une telle configuration, notamment du fait de leur dimension trop importante, considérée dans le sens du balayage, et jusqu'à présent deux faisceaux en éventail successifs superposaient leur image sur un seul film.

Le problème de l'encombrement du récepteur peut être réglé en utilisant des récepteurs du type comportant des cellules de détection, telles que précédemment mentionnées. Les cellules de détection sont alors organisées de manière à constituer une barrette de détection dont le plan de détection, exposé au faisceau, a une forme allongée dans le sens du plan du faisceau en éventail. La barrette de détection est déplacée durant le balayage, de façon à rester en permanence confondue avec la projection de la seconde fente citée plus haut comme étant interposée entre l'objet et le récepteur.

Un inconvénient de cette solution réside en ce qu'elle ne permet pas d'objtenir une image ayant une définition aussi bonne que l'image obtenue par un film, cette définition étant liée à la dimension de chaque cellule et à leur nombre.

Si la seconde fente est d'une dimension inférieure à la résolution de l'image recherchée, la barrette de détection peut être constituée d'une seule rangée de cellules de détection. Lorsque la seconde fente est plus grande que la résolution recherchée, la barrette de détection doit être constituée de plusieurs rangées de cellules, ce qui impose d'utiliser un dispositif de transfert de l'information d'une rangée de cellules à la rangée de cellules voisines, à la vitesse de déplacement de la barrette de détection.

Cette disposition, tout en ne permettant pas d'atteindre la qualité de l'image obtenue par un film, ajoute à la complexité des moyens nécessaires pour reconstituer une image, à partir des informations fournies par chaque cellule durant le balayage. Il est à remarquer que ces moyens constituent un équipement important et particulièrement onéreux, par rapport aux moyens destinés à la mise en oeuvre d'un film.

La présente invention concerne un appareil de radiodiagnostic à balayage dans lequel le récepteur conserve les avantages d'un film, tout en présentant un encombrement réduit par rapport à l'art antérieur, de sorte qu'il est possible, notamment, d'utiliser plusieurs récepteurs afin de réaliser simultanément plusieurs images d'un objet, chaque image étant portée sur un récepteur ou film séparé.

Selon l'invention, un appareil de radiologie à balayage comportant, une source de rayonnement X, un collimateur définissant un faisceau X plat en éventail, un film sensible au rayonnement X, des moyens pour produire un mouvement dudit faisceau en éventail par rapport à un objet à examiner, afin de réaliser un balayage dudit objet par ledit faisceau, est caractérisé en ce que ledit film est conformé selon une surface de révolution dont l'axe de révolution est soit sensiblement parallèle au plan dudit faisceau en éventail soit appartient à ce plan, ledit film étant d'une part déplacé par rapport audit objet dans un même sens et en synchronisme avec ledit mouvement dudit faisceau en éventail, ledit film étant d'autre part mis en rotation sur lui-même autour dudit axe de révolution, de manière à renouveler une surface d'exposition exposée par ledit faisceau en éventail durant ledit mouvement de balayage.

L'invention sera mieux comprise grâce à la description qui suit, faite à titre d'exemple non limitatif, et aux deux figures annexées parmi lesquelles :

- la figure 1 montre schématiquement, par une vue en perspective, un appareil radiologique conforme à l'invention ;
- la figure 2 montre par une vue en perspective une deuxième version de l'appareil radiologique de l'invention.

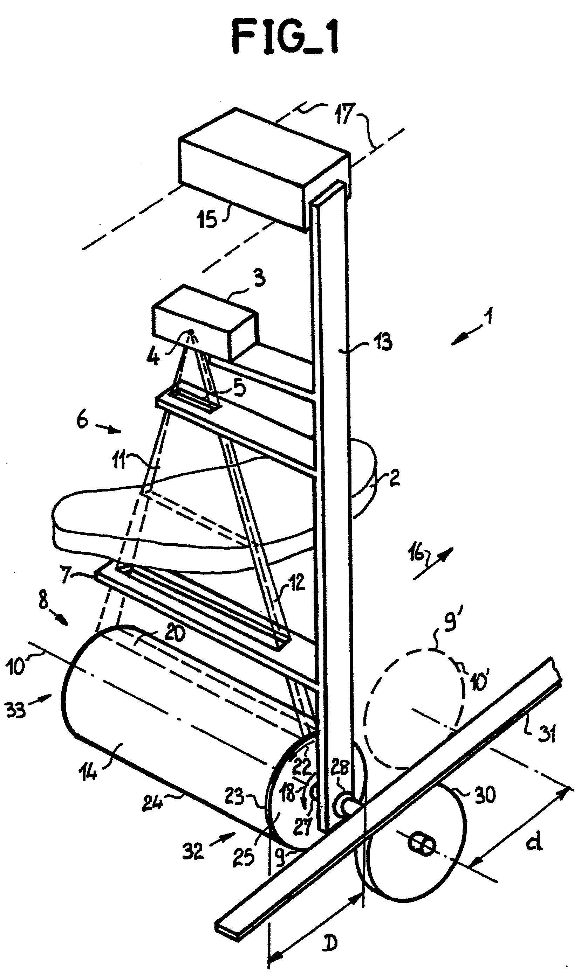

La figure 1 montre un appareil radiologique 1 selon l'invention, permettant d'obtenir une image (non représentée), ou simultanément plusieurs images radiologiques d'un objet 2. L'appareil radiologique 1 comporte un tube radiogène 3 d'un type classique générant, à partir d'une source 4, un rayonnement X. Le rayonnement X passe à travers une fente ou collimateur 5 qui lui confère la forme d'un faisceau plat en éventail 6. Le faisceau en éventail 6 traverse ensuite l'objet 2 avant de passer par une fente 7 pour exposer ensuite un récepteur 8 sensible au rayonnement X. Le récepteur 8 est constitué par un film 9 tel qu'il a été précédemment expliqué dans le préambule, c'est-à-dire un film sur lequel l'effet des rayons X produit une modification donnant lieu à une modification locale d'une propriété physique pouvant être mesurée par des moyens d'analyse appropriés ; le film 9 pouvant par exemple comporter une même surface sensible qu'un film radiographique classique.

Selon une caractéristique de l'invention, le film 9 est enroulé sur lui-même de manière à constituer une surface de révolution 14 dont l'axe de révolution 10 est sensiblement parallèle au plan 11 du faisceau en éventail 6 ; l'axe de révolution 10 étant, dans l'exemple non limitatif décrit, contenu dans un même plan qu'un plan central 12 (représenté par une ligne en traits pointillés) du faisceau en éventail 6.

L'image de l'objet 2 est réalisée dans un balayage de ce dernier par le faisceau en éventail 6. Dans l'exemple non limitatif de la description, ce balayage résulte d'un déplacement linéaire de l'ensemble constitué par le tube radiogène 3 c'est-à-dire la source de rayonnement X 4, le collimateur 5 et la fente 7, dans un sens montré par une flèche 16 sensiblement perpendiculaire au plan 11 du faisceau en éventail 6. A cet effet, le dispositif radiologique 1 comporte des moyens 13-15 pour produire le mouvement du faisceau en éventail 6. Dans l'exemple non limitatif décrit, ces moyens consistent en une potence 13 solidarisée à la fente 7, au collimateur 5 et au tube radiogène 3 de manière conventionnelle, la potence 13 étant elle-même solidarisée à un chariot motorisé 15 circulant sur des rails 17 représentés par des lignes en traits pointillés.

Selon une caractéristique de l'invention, le film 9 est déplacé par rapport à l'objet 2 dans un même mouvement que celui du mouvement de balayage du faisceau en éventail 6, c'est-à-dire dans un même sens 16, et en synchronisme avec ce dernier ; le plan central 11 du faisceau en éventail 6 restant dans ce mouvement sensiblement centré sur l'axe de révolution 10.

Selon une caractéristique essenteille de l'invention, le film 9 durant son déplacement dans le sens 16 ou mouvement de balayage est mis en rotation sur lui-même autour de l'axe de révolution 10, dans le sens montré par une seconde flèche 18 par exemple.

Dans cette configuration, le film 9 est exposé par le faisceau en éventail 6 sur une surface d'exposition 20 résultant de la projection de la fente 7, et la combinaison du déplacement dans le sens 16 avec la rotation dans le sens 18, a pour conséquence de renouveler par une surface vierge du film 9, la surface d'exposition 20 exposée par le faisceau en éventail 6 ; la direction moyenne du mouvement du film 9 au niveau de la surface d'exposition 20, étant à l'opposé du sens 16 du déplacement du faisceau en éventail 6, comme montré par une troisième flèche 22.

Dans l'exemple non limitatif de la descritpion, le film 9 à la forme d'un cylindre, et la circonférence d'un cercle 23 sur lequel s'appuie une directrice 24 de ce cylindre constitue une longueur du film 9 si celui-ci avait été plan comme dans l'art antérieur. Dans la configuration de l'invention, le film 9 est impressionné par le faisceau en éventail 6 comme s'il avait été plan et immobile comme dans l'art antérieur ; mais un avantage important apporté par l'invention est une réduction considérable de la dimension présentée par le film 9, selon le sens 16 du déplacement, cette dimension étant réduite dans l'invention au diamètre D du cercle 23 alors qu'elle aurait été dans l'art antérieur égale à la circonférence du cercle 23. Cette réduction de l'encombrement permet par exemple, avec la présente invention, de constituer de manière en elle-même classique à côté du faisceau en éventail 6 un second faisceau en éventail (non représenté) à partir, par exemple, de mêmes moyens que ceux utilisés pour réaliser le premier faisceau en éventail 6 ; une telle réalisation est décrite par exemple dans une demande de brevet PCT, publiée sous le N° WO 82/01124, qui montre un objet balayé simultanément par plusieurs faisceaux X en éventail. Dans ces conditions, un second film 9' (représenté par un cercle en traits pointillés), ayant une même forme que le premier film 9, peut être disposé parallèlement à ce dernier et de manière que son axe de révolution 10' soit à une distance $\underline{d}$ du premier axe de révolution 10 légèrement supérieure au diamètre D du cercle 23. Il est alors possible de produire un balayage complet de l'objet 2 par le premier et par le second faisceau en éventail, de manière à réaliser simultanément une image de l'objet 2 formée sur le premier film 9, et une autre image formée sur le second film 9'.

Le film 9 peut être cylindrique soit dès sa fabrication, soit être suffisamment souple pour être plaqué contre la surface d'un support de film 25 ayant, dans l'exemple non limitatif de la figure 1, la forme d'un cylindre. Le support de films 25 est réalisé en un matériau absorbant au rayonnement X, de manière que seule la surface d'exposition 20 soit exposée au faisceau en éventail 6. Dans l'exemple non limitatif décrit, le support de film 25 comporte un arbre 27 disposé selon l'axe de révolution 10 ; l'arbre 27 étant solidarisé à la potence 13, par l'intermédiaire de moyens de roulement 28 par exemple, afin que le déplacement de la potence 13 dans le sens 16 entraîne également le déplacement du support de films 25 et du film 9, tout en permettant la rotation de ces derniers autour de l'axe de révolution 10.

Pour réaliser sur le film 9 une image de l'objet 2, d'une manière sensiblement identique à l'image obtenue avec un film plan et immobile, la vitesse de rotation du film 9 doit être liée, de manière sensiblement proportionnelle, à la vitesse du mouvement 16 de balayage du faisceau en éventail 6. Ceci peut être réalisé par exemple par des moyens en eux-mêmes classiques (non représentés), tels qu'un moteur pour commander la rotation du support de film 25, ce moteur étant lui-même commandé par un dispositif de mesure de la vitesse du mouvement 16 de balayage.

Dans l'exemple non limitatif de la description, la rotation du film 9 à une vitesse proportionnelle à celle du mouvement 16 du balayage, est obtenue grâce à un disque de roulement 30 solidarisé à l'arbre 27, et roulant en appui contre une surface de roulement 31 parallèle au mouvement 16 de balayage et supportée par des moyens conventionnels (non représentés). Le disque de roulement 30 et la surface de roulement 31 sont disposés à une extrémité 32 du cylindre formé par le support du film 25, afin de n'être pas disposé dans le champ du faisceau en éventail 6, cette extrémité 32 étant située du côté de la potence 13. Il est à remarquer qu'un même montage peut également être disposé du côté d'une seconde extrémité 33 opposée à la première extrémité 32, mais que dans certains cas comme la mammographie, il est impératif que ce montage soit disposé du côté de la première extrémité 32 pour que le film 9 puisse être très près du thorax.

Le disque de roulement 30 ayant un axe de symétrie confondu avec l'axe de révolution 10, et ayant sensiblement un même diamètre (non représenté) que le diamètre D du cercle 23, son déplacement dans le sens du mouvement 16 de balayage engendre sa rotation autour de l'axe de révolution 10 selon la seconde flèche 18, et entraîne ainsi la rotation du film 9, à la vitesse appropriée.

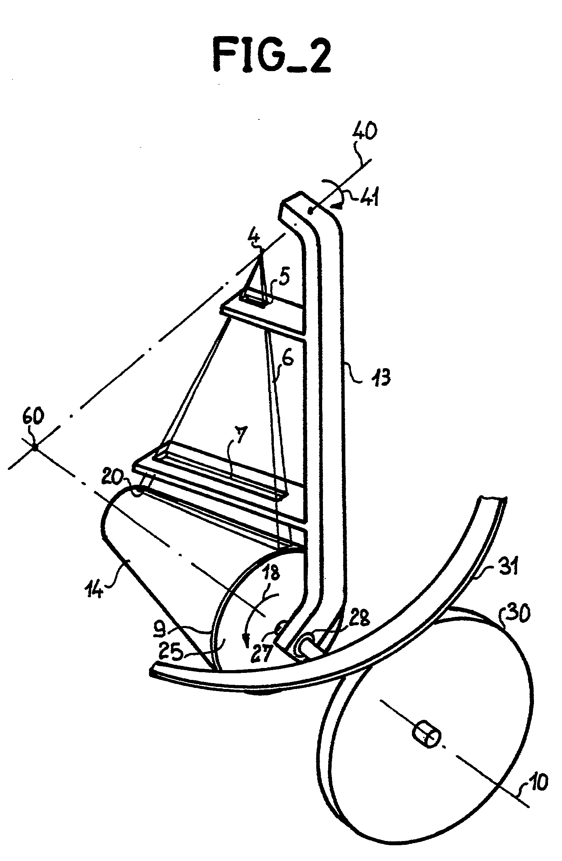

La figure 2 montre une seconde version de l'invention, dans laquelle le film 9 constitue une surface de révolution 14 de type cônique, le film 9 étant monté sur le support de film 25, lui-même constitué selon un tronc de cône. Ceci permet notamment de former une image de l'objet 2 (non représenté sur la figure 2) sur la surface de révolution 14 qui, développée, constitue un arc de couronne ; une telle configuration pouvant être intéressante dans le cas de la mammographie par exemple.

Ainsi que dans l'exemple précédent, la source 4 émet un rayonnement X, qui passe à travers le collimateur 5 par lequel il est formé selon le faisceau en éventail 6, et qui ensuite traverse l'objet 2 puis la fente 7 pour exposer le film 9 sur la surface d'exposition 20 ; le collimateur 5, la fente 7 et le support de film 25 étant portés par la potence 13, le tube radiogène 4 n'étant pas représenté pour plus de clarté de la figure.

Dans l'exemple non limitatif de cette version de l'invention, le mouvement de balayage 16 de l'objet 2 par le faisceau en éventail 6 est obtenu en laissant fixe la source 4 et l'objet 2, et en déplaçant d'un mouvement uniforme le collimateur 5, la fente 7 et le support de film 25. A cette fin, la potence 13 est mise en rotation selon une quatrième flèche 41, autour d'un axe de rotation 40 passant par la source 4 et par l'axe de révolution 10 du support de film 25, comme montré sur la figure 2 ; dans l'exemple décrit, le point d'intersection 60 de l'axe de rotation 40 et de l'axe de révolution 10 est le sommet du cône formé par la surface de révolution 14. La combinaison de ce dernier mouvement de rotation 41 et de la rotation du film 9 autour de l'axe de révolution 10 selon la seconde flèche 18, confère au film 9 un mouvement tel, que les points du film dans la région exposée, c'est-à-dire la surface d'expostion 20 correspondant elle-même à la projection de la fente 7, puisse être considérés, avec une approximation compatible avec la résolution recherchée pour l'image, comme fixes par rapport à la source 4 et à l'objet 2 lorsque le collimateur 5 et la fente 7 se déplacent ; la surface d'exposition 20 étant, dans l'exemple non limitatif décrit, sensiblement parallèle à la fente 7, grâce à l'orientation conférée à l'axe de révolution 10.

L'avantage d'une telle configuration est que le mouvement de balayage 16 de l'objet 2 par le faisceau en éventail 6 est réalisée selon un arc de couronne (non représentée) qui correspond également au développement du film 9 quand il est constitué selon un tronc de cône.

La rotation du film 9 autour de l'axe de révolution 10 doit être liée à la vitesse du balayage, et la bonne vitesse de rotation peut être obtenue par des moyens analogues à ceux de l'exemple précédent, c'est-à-dire sous la commande d'un moteur (non représenté), ou par roulement soit du tronc du cône formé par le support de film 25, soit du disque de roulement 30, sur une surface de roulement.

Dans l'exemple montré à la figure 2, le disque de roulement 30 est constitué selon un tronc de cône ayant un même sommet 60 que le cône formé par la surface de révolution 14. Le disque de roulement 30 roule en appui sur la surface de roulement 31 qui, dans ce cas, est formée par une partie de la surface d'un cône (non représenté) ayant sensiblement pour sommet le sommet 60, et dont l'axe de révolution est confondu avec l'axe de rotation 40 autour duquel tourne la potence 13.

Cette version de l'invention, de même que dans l'exemple précédent, permet de diminuer la dimension du film considérée dans le sens du mouvement de balayage, et de disposer plusieurs films les uns derrière les autres, exposés chacun par un faisceau en éventail de manière à réaliser simultanément plusieurs images.

Il est à remarquer qu'un autre avantage de l'invention, réside en ce que la forme cylindrique ou cônique du support de film 25 et des films 9 se prête à une analyse par des systèmes du type belinographe.

## Revendications

1. Appareil de radiodiagnostic à balayage comportant, une source de rayonnement X (4), un collimateur (5) définissant un faisceau X plat en éventail (6), un film (9) sensible au rayonnement X, une fente (7) interposée entre un objet (2) à examiner et ledit film (9) sur le trajet dudit faisceau en éventail (6), des moyens (13) pour produire un mouvement (16) dudit faisceau en éventail par rapport audit objet afin de réaliser un balayage de ce dernier par ledit faisceau en éventail (6), caractérisé en ce que ledit film (9) est conformé selon une surface de révolution (14) dont l'axe de révolution (10) est soit sensiblement parallèle au plan dudit faisceau en éventail (6) soit appartient à ce plan, ledit film étant d'une part déplacé par rapport audit objet (2) dans le même mouvement (16) de balayage et en synchronisme avec ledit faisceau en éventail (6), ledit film (9) étant d'autre part mis en rotation sur lui-même autour dudit axe de révolution (10), de manière à renouveler durant ledit mouvement (16) de balayage une surface d'exposition (20) exposée par ledit faisceau en éventail (6).

2. Appareil de radiodiagnostic selon la revendication 1, caractérisé en ce que ledit film (9) est conformé selon un cylindre.

3. Appareil de radiodiagnostic selon la revendication 1, caractérisé en ce que ledit film (9) est conformé selon un cône.

4. Appareil de radiodiagnostic selon l'une des revendications précédentes, caractérisé en ce que ledit film (9) est monté sur un support de film (25) solidarisé auxdits moyens (13) pour produire le mouvement de balayage, par l'intermédiaire de moyens de roulement (28).

5. Appareil de radiodiagnostic selon la revendication 4, caractérisé en ce que ledit support de film (25) est réalisé en un matériau absorbant le rayonnement X.

6. Appareil de radiodiagnostic selon l'une des revendications précédentes, caractérisé en ce qu'il comporte en outre des moyens (30–31) pour engendrer ladite rotation (18) dudit film (9) à une vitesse sensiblement proportionnelle à celle du mouvement (16) de balayage.

7. Appareil de radiodiagnostic selon la revendication précédente, caractérisé en ce que lesdits moyens (30–31) pour engendrer la rotation du film comportent une surface de roulement (31) parallèle audit mouvement de balayage (16), et un disque de roulement (30) solidarisé audit support de film (25) et roulant en appui sur ladite surface de roulement (31).

8. Appareil de radiodiagnostic selon l'une des revendications 1 à 4, caractérisé en ce que lesdits moyens (13) pour produire le mouvement (16) de balayage comportent une potence (13) mobile par rapport à l'objet (2) et par rapport à la source (4) de rayonnement, ledit collimateur (5), ladite fente (7) et ledit support de film (25) étant solidarisés à ladite potence (13).

9. Appareil de radiodiagnostic selon la revendication précédente, caractérisé en ce que ladite potence (13) est mobile en rotation (41) autour d'un axe (40) passant par ladite source (4) de rayonnement et coupant ledit axe de révolution (10) en un point constituant sensiblement le sommet (60) d'un cône formé par ledit film (9).

## Claims

1. A sweep radiodiagnostic apparatus comprising a source (4) of x-ray radiation, a collimator (5) defining a flat fanned out x-beam (6), a film (9) sensitive to the x-ray radiation, a pupil (7) placed between an object (2) to be examined and the said film (9) on the path of the said fanned out beam (6), means (13) in order to produce motion of the said fanned out beam in relation to the said object in order to perform a sweep of the latter by the said fanned out beam (6), characterized in that the said film (9) conforms to a surface (14) of revolution whose axis of revolution (10) is either substantially parallel to the plane of the said fanned out beam (6) or belongs to this plane, the said film being on the one hand displaced by in relation to the said object (2) in the same sweep motion (16) and synchronously with the said fanned out beam (6), the said film (9) being on the other hand caused to rotate on itself about the said axis (10) of revolution in such a manner as to renew, during the said sweep motion (16), an exposure surface (20) exposed to the said fanned out beam (6).

2. The radiodiagnostic apparatus as claimed in claim 1 characterized in that the said film (9) conforms to a cylinder.

3. The radiodiagnostic apparatus as claimed in claim 1 characterized in that the said film (9) conforms to a cone.

4. The radiodiagnostic apparatus as claimed in any one preceding claim characterized in that the said film (9) is mounted on a film support (25) secured to the said means (13) for producing the sweep motion, by the intermediary of rolling means (28).

5. The radiodiagnostic apparatus as claimed in claim 4 characterized in that the said film support (25) is made of an x-ray absorbing material.

6. The radiodiagnostic apparatus as claimed in any one preceding claim characterized in that it furthermore comprises means (30 and 31) for causing the said rotation (18) of the said film (9) at a speed substantially proportional to that of the sweep motion (16).

7. The radiodiagnostic apparatus as claimed in the preceding claim characterized in that the said means (30 and 31) for causing rotation of the film comprise a roll surface (31) parallel to the said sweep motion (16) and a roll disk (30) secured to the film support (25) and rolling on the said roll surface (31).

8. The radiodiagnostic apparatus as claimed in any one of the claims 1 through 4 characterized in that the said means (13) for producing the sweep motion (16) comprise a hanger (13) fixed in relation to the object (2) and in relation to the source (4) of radiation, the said collimator (5), the said pupil (7) and the said film support (25) being secured to the said hanger (13).

9. The radiodiagnostic apparatus as claimed in the preceding claim characterized in that the said hanger (13) is able to be moved in rotation (41) around an axis (40) extending through the said source (4) of radiation and intersecting the said axis (10) of revolution at a point which substantially constitutes the apex (60) of a cone formed by the said film (9).

**Patentansprüche**

1. Abtast-Radiodiagnostikgerät, mit einer Röntgen-Strahlungsquelle (4), einem Kollimator (5), der ein flaches, fächerförmiges Röntgen-Bündel (6) definiert, einem Film (9), der für die Röntgen-Strahlung empfindlich ist, einem Schlitz (7), der zwischen einem zu untersuchenden Gegenstand und dem genannten Film (9) auf dem Weg des fächerförmigen Bündels (6) eingefügt ist, mit Mitteln (13) zum Erzeugen einer Bewegung (16) des fächerförmigen Bündels in bezug auf den Gegenstand, um eine Abtastung desselben durch das fächerförmige Bündel (6) zu verwirklichen, dadurch gekennzeichnet, daß der Film (9) gemäß einer Umdrehungsfläche (14) ausgebildet ist, deren Umdrehungsachse (10) entweder im wesentlich parallel zu der Ebene dieses fächerförmigen Bündels (6) ist oder zu dieser Ebene gehört, wobei der Film einerseits in bezug auf den Gegenstand (2) mit derselben Abtastbewegung (16) und synchron mit dem fächerförmigen Bündel (6) verschoben wird und andererseits um sich selbst um diese Umdrehungsachse (10) herum in Rotation gebracht wird, so daß während der Abtastbewegung (16) eine Belichtungsfläche (20), die durch das fächerförmige Bündel (6) belichtet wird, erneuert wird.

2. Radiodiagnostikgerät nach Anspruch 1, dadurch gekennzeichnet, daß der Film (9) gemäß einem Zylinder ausgebildet ist.

3. Radiodiagnostikgerät nach Anspruch 1, dadurch gekennzeichnet, daß der Film (9) gemäß einem Kegel ausgebildet ist.

4. Radiodiagnostikgerät nach einem der vorstehenden Ansprüche, dadurch gekennzeichnet, daß der Film (9) auf einem Filmträger (25) angebracht ist, der mit den Mitteln (13) fest verbunden ist, um die Abtastbewegung mittels Rollmitteln (28) zu erzeugen.

5. Radiodiagnostikgerät nach Anspruch 4, dadurch gekennzeichnet, daß der Filmträger (25) aus einem die Röntgenstrahlung absorbierenden Material besteht.

6. Radiodiagnostikgerät nach einem der vorstehenden Ansprüche, dadurch gekennzeichnet, daß es ferner Mittel (30–31) zur Erzeugung der Rotation (18) des Filmes (9) mit einer Geschwindigkeit, die im wesentlichen zu der Geschwindigkeit der Abtastbewegung (16) proportional ist, umfaßt.

7. Radiodiagnostikgerät nach dem vorstehenden Anspruch, dadurch gekennzeichnet, daß die Mittel (30–31) zur Erzeugung der Rotation des Filmes eine Rollfläche (31), die zu der Abtastbewegung (16) parallel ist, sowie eine Rollscheibe (30) umfassen, die mit dem Filmträger (25) fest verbunden ist und sich auf dieser Rollfläche (31) abstützend rollt.

8. Radiodiagnostikgerät nach einem der Ansprüche 1 bis 4, dadurch gekennzeichnet, daß die Mittel (13) zur Erzeugung der Abtastbewegung (16) einen Ausleger (13) umfassen, der in bezug auf den Gegenstand (2) und auf die Strahlungsquelle (4) beweglich ist, wobei der Kollimator (5), der Schlitz (7) sowie der Filmträger (25) mit dem Ausleger (13) fest verbunden sind.

9. Radiodiagnostikgerät nach dem vorstehenden Anspruch, dadurch gekennzeichnet, daß der Ausleger (13) um eine Achse (40) drehbeweglich (41) ist, die die Strahlungsquelle (4) durchläuft und die Umdrehungsachse (10) in einem Punkt schneidet, der im wesentlichen die Spitze (60) eines durch den Film (9) gebildeten Kegels bildet.

# FIG_1

# FIG_2